# EUROPÄISCHE PATENTSCHRIFT

(11) **EP 4 114 634 B1**
(45) Veröffentlichungstag und Bekanntmachung des Hinweises auf die Patenterteilung: **08.07.2026**
(21) Anmeldenummer: 22708884.6
(22) Anmeldetag: 22.02.2022
(51) Int. Cl.: B29L 31/00, B29C 33/38, B29C 43/36, B29C 43/52, C22C 37/04, C22C 37/08, C22C 37/10

(54) **GUSSEISENWERKSTOFF, VERWENDUNG EINES GUSSEISENWERKSTOFFS UND VERFAHREN ZUR HERSTELLUNG UND/ODER AUSKLEIDUNG EINES FORMWERKZEUGS**
CAST IRON MATERIAL, USE OF A CAST IRON MATERIAL AND METHOD FOR PRODUCING AND/OR LINING A MOULD
MATIÈRE À BASE DE FONTE, UTILISATION D'UNE MATIÈRE À BASE DE FONTE ET PROCÉDÉ DE FABRICATION ET/OU DE REVÊTEMENT D'UN OUTIL DE MOULAGE

(30) Priorität: 22.02.2021 DE 102021000922
(43) Veröffentlichungstag der Anmeldung: 11.01.2023
(73) Patentinhaber: Siempelkamp Maschinen- und Anlagenbau GmbH, 47803 Krefeld (DE)
(72) Erfinder: STELLMACHER, Jens, 47800 Krefeld (DE); GEIER, Georg, 47799 Krefeld (DE)
(74) Vertreter: Cohausz & Florack
(86) Internationale Anmeldenummer: PCT/EP2022/054349
(87) Internationale Veröffentlichungsnummer: WO 2022/175544

(56) Entgegenhaltungen:
- CN-A- 102 528 322
- DE-A1- 1 458 426
- DE-A1- 102011 051 446

## Beschreibung

Die Erfindung betrifft einen Gusseisenwerkstoff.

Die Erfindung betrifft weiter eine Verwendung eines Gusseisenwerkstoffs.

Die Erfindung betrifft einen Gusseisenwerkstoff. Der Gusseisenwerkstoff ist in hohem Maße temperaturinvariant und insbesondere für temperaturgeführte Prozesse, beispielsweise zur Auskleidung einer kontinuierlich- oder diskret arbeitenden Presse, einer Mahlvorrichtung, einer Armatur und/oder ähnlichen Vorrichtungen geeignet. Der Begriff "Gusseisenwerkstoff" kann hier einen gegossenen bzw. gießbaren Eisenwerkstoff bezeichnen; "Guss-" kann also als Hinweis auf das Urformverfahren "Gießen" zu verstehen sein.

In der DE 10 2011 051 446 A1 wird ein Gusseisenwerkstoff beschrieben, der hochtemperaturfest ist und grundsätzlich zur Auskleidung einer kontinuierlichen oder diskret arbeitenden Presse geeignet scheint, wobei der dort offenbarte Gusseisenwerkstoff durch hohen Silizium-Anteil, Carbidbildung verhindert und damit eine Zerfallsglühung nicht notwendig ist. Hierbei wird Niob als Ersatz für einen Teil des Molybdäns zugesetzt.

Dieser grundsätzlich vorteilhaft ausgebildete und in der Praxis für viele Anwendungsfälle gut einsetzbare Gusseisenwerkstoff zeigt jedoch den Nachteil, dass dieser Gusseisenwerkstoff mit steigender Temperatur eine Längenänderung erfährt. Damit müssen die sich bei Abkühlung auf Raumtemperatur ergebenden Schwindmaße bereits bei der Konstruktion berücksichtigt werden, was umständlich oder prozesstechnisch in manchen Fällen sogar praktisch unmöglich ist, da unter Anderem die Schwindmaße nicht nur von der Bauteilgeometrie und den werkstoffgegebenen Eigenschaften abhängen, sondern auch durch leichte Abweichungen in der Zusammensetzung und/oder durch Umwelteinflüsse bei der Kühlung, etwa den in der Umgebung herrschenden klimatischen Bedingungen, variieren können.

Dies ist insbesondere bei der Gestaltung von Großgussteilen problematisch, da sich hier unterschiedliche Wandstärken kaum verhindern lassen und sich je nach Wandstärke arealweise unterschiedliche Abkühlgeschwindigkeiten einstellen. Zudem ergeben sich bei Großgussteilen entsprechend große wirksame Hebellängen. Ein Verzug von wenigen Zehntelgrad macht sich in einem Großgussteil von bspw. über 3m, 5m oder gar über 10m Länge, deutlich stärker störend bemerkbar als in einem Normalgussteil was sich je nach Auffassung und unterschiedlichen Literaturangaben zwischen wenigen Zentimetern bis maximal etwa 1,0m, 1,5m oder 2m bewegen kann.

Ein Großgussteil kann also sehr leicht zum Verziehen der Form und zur Beschädigung des Gussstücks, Formstücks oder Presslings beitragen und die Ausschussrate oder den Nachbearbeitungsaufwand erhöhen oder einen einstückigen Guss wegen Auftreten von Rissen durch sich einstellende Eigenspannungen gar unmöglich machen.

Diese Problematik verstärkt sich umso mehr, je größer die maximale Länge(n) eines Gusswerkstücks beträgt.

Zudem treten diese Probleme bei temperaturgeführten Prozessen bei jedem Prozesszyklus erneut auf und sind nicht auf den Erzeugungsprozess an sich beschränkt.

Eine weitere Problematik entsteht, wenn es sich bei dem Großgussstück um ein Pressenteil, insbesondere um ein Presswerkzeug handelt und die Presse beziehungsweise das Presswerkzeug zur Herstellung von Verbundstoffen mit Carbon- oder Glasfaseranteilen dienen können muss.

Denn Verbundstoffe mit Carbonfaseranteilen, insbesondere Thermoplaste mit eingelagerten Carbonfasernetzen, z.B. CFK weisen selbst extrem geringe Längen- bzw. Volumenausdehnungen auf, wobei z.T. starke Unterschiede in Richtung des Fasergelages oder winklig dazu, insbesondere orthogonal dazu, bestehen, was in deutlich abgeschwächter Form auch für Glasfaserkunststoffe GFK gilt.

Im Gegenzug halten derartige Verbunde insbesondere während ihres thermischen Herstellungs- oder Verarbeitungsprozesses dementsprechend auch kaum eine Zwangsdehnung aus. Insbesondere wenn in einem temperaturgeführten Verarbeitungsprozess so genannte "Prepregs" oder "Organobleche" verarbeitet werden sollen, kann die Längendehnung der Presswerkzeuge bzw. der Pressmatritzen leicht die maßgebende Grenze der Verarbeitungsmöglichkeiten darstellen. Deshalb werden heute viele CFK-Bauteile nach wie vor in so genannten RTM-Verfahren gegossen, statt aus Prepregs gepresst zu werden, auch wenn dies häufig große Nachteile, bspw. hinsichtlich der erreichbaren Homogenität und Qualität mit sich bringt. Erfährt nämlich beispielsweise auch nur ein Presswerkzeug- oder Matrizenteil eine Längen- bzw. Volumenänderung, die sich unterschiedlich zu der Längen- bzw. Volumenänderung der Prepregs bzw. Organobleche oder allgemein des zu erzeugenden bzw. zu bearbeitenden Werkstücks verhält, folgt zwangsweise, dass wenigstens Trägerschichtanteile wenigstens arealweise, innerlich oder bis zu einer Oberfläche reichend Verschiebungen erfahren und in Folge dessen häufig auch wenigstens Strukturanteile zu Bruch gehen und damit nicht mehr die geplante Strukturfestigkeit erhalten können.

Die Aufgabe der Erfindung liegt darin einen Gusseisenwerkstoff zur Herstellung und/oder Auskleidung einer Form, eines Presswerkzeuges oder einer Presse zu entwickeln, der eine möglichst kleine Längen- und/oder Volumenausdehnung aufweist. Dies soll insbesondere für den Temperaturbereich von -60°C bis 440°C, insbesondere von 0°C bis 420°C gelten.

Eine weitere Aufgabe der Erfindung kann es sein, dass sich in einer aus der Legierung hergestellten oder mit ihr ausgekleideten Werkzeugform erzeugten Werkstücke leicht ablösen lassen, insbesondere also ein gegenseitiges Aufschrumpfen im Abkühlungsprozess vor der Entnahme des zu erzeugenden Werkstücks zu minimieren, insbesondere zu unterbinden.

Die Aufgabe wird durch einen Gusseisenwerkstoff, der zumindest folgende Anteile in Gewichtsprozent als Elemente oder als Verbindungen von:
Kohlenstoff im Bereich von 1,0% bis 4,0%,
Silizium im Bereich von 1,0% bis 5,0%,
Mangan im Bereich von 0,1% bis 1,5%,
Nickel im Bereich von 36,5% bis 48,0%,
Chrom im Bereich von 0,01% bis 0,25%,
Magnesium bis 0,15%
Kupfer bis 0,5%,
Phosphor bis 0,08%,
umfasst, Rest Eisen und unvermeidbare Verunreinigungen, gelöst.

Das hat den Vorteil, dass der Gusseisenwerkstoff aus dem austenitischen Kristallgitter abgekühlt wird und im Temperaturbereich von -60°C bis 440°C, insbesondere im Temperaturbereich von 0°C bis 420°C eine äußerst geringe Volumen- und Längenänderung, (in positiver Richtung: Volumen- bzw. Längenausdehnung) aufweist. Weiter ist von Vorteil, dass das Volumenänderungsverhalten eines derartigen Gusseisenwerkstoffs sich wenigstens innerhalb der genannten Temperaturbereiche, weitgehend im Gleichklang mit dem von CFK-Werkstoffen befindet. Zudem ist bei einem Gusseisenwerkstoff die Wärmeleitfähigkeit auf Grund des ausgeschiedenen Kohlenstoffs in Form von Graphit deutlich besser als bei Stahlguss, sodass ein günstigeres Verhalten des Bauteils im thermischen Prozess gegeben ist.

Von ganz besonderem Vorteil ist es dabei, dass das Volumenänderungsverhalten eines derartigen Gusseisenwerkstoffs sehr ähnlich zu dem eines GFK-Werkstoffs und insbesondere zu dem eines CFK-Werkstoffs einstellbar ist. Überraschenderweise gilt dies nicht nur für den absoluten Wert bezogen auf eine zu überwindende, beispielsweise durch einen Prozess vorgegebene Temperaturdifferenz sondern völlig anders als bei bisherigen für vergleichbare Zwecke hergestellten Legierungen anderer Anwendungsgebiete auch für den gesamten Verlauf der Längen- und/oder Volumenänderung. Nur so ist nämlich das Ziel erreichbar, mikroskopische oder makroskopische Verschiebungen innerhalb der sich bildenden Werkstückstruktur zu minimieren bzw. zu verhindern.

Zudem weist die Legierung als Gusseisenwerkstoff gegenüber einer Stahlgusswerkstofflegierung wesentliche Vorteile auf: Durch die Ausscheidung des gelösten Kohlenstoffs aus der Schmelze während des Erstarrungsprozesses entsteht mit dem Gusseisen letztlich ein Kompositwerkstoff. Durch diesen Ausscheidungsprozess, der mit einer Volumenänderung im Material verbunden ist, wird das Schwindungsverhalten des Gusseisens gegenüber dem Stahlguss günstig beeinflusst. Dies führt dann in der Folge zu einem geringeren Schwindungsverhalten, damit letztlich auch zu geringerer Lunkerbildung und dem Vorliegen eines in sich - vor Allem mit Hinblick auf den Verlauf des Längen- oder Volumenänderungsverhaltens unter Temperatureinfluss - deutlich definitierteren Verhaltens. Zudem sind daraus herzustellenden Bauteile prozesstechnisch einfacher in solider Qualität erzeugbar, was letztlich auch einen wirtschaftlichen Vorteil beinhaltet. Gleichzeitig ist oftmals keine weitere Wärmebehandlung notwendig, ganz im Gegenteil zu Stahlguss, der regelmäßig einer, dem ursprünglichen Erstarrungsprozess, nachfolgenden Wärmebehandlung zu unterziehen ist.

Der Gusseisenwerkstoff kann zusätzlich zu den aufgeführten Elementen Verunreinigungen im Bereich von 0,0% bis 5,0%, vorzugsweise 0,0% bis 1,0%, ganz bevorzugt 0,0% bis 0,5% enthalten. Mit den "aufgeführten" Elementen sind die in den Patentansprüchen genannten - gezielt eingesetzten - Legierungsbestandteile gemeint, die somit nicht als "Verunreinigung" anzusehen sind. Bei der Verwertung von Schrott werden weitere Materialien eingearbeitet, die zum Auftreten von weiteren Elementen führen z.B. Natrium, Kalium, Strontium und andere Elemente des Periodensystems. Damit treten Verunreinigungen auf, wobei die Haupteigenschaften weitgehend erhalten bleiben. Derartige Verunreinigungen werden daher auch als "unvermeidliche" oder "unvermeidbare" Verunreinigungen bezeichnet.

Der oben genannte Gusseisenwerkstoff weist einen Anteil von Kohlenstoff im Bereich von 1,0% bis 4,0%, bevorzugt von 1,0% bis 2,5%, besonders bevorzugt von 1,3% bis 2,0% auf.

Das hat den Vorteil, dass zum einen reaktive Substanzen nicht so schnell mit dem Kohlenstoff reagieren und der damit eine leichtere Ablösung des Gussstücks von dem Presswerkzeug aus dem oben genannten Gusseisenwerkstoff ermöglicht. Dies ist insbesondere dann von Vorteil, wenn der Gusseisenwerkstoff zur Herstellung von Presswerkzeugen und/oder Pressmatritzen verwendet werden soll, da z.B. das Harz des CFKs oder GFKs zu den reaktiven Substanzen im oben genannten Sinn gehören. Weiter verändert ein Kohlenstoffanteil in einem oben genannten Bereich die Elektronegativität, was zu einer Verbesserung des Korrosionsverhaltens des unter Verwendung der vorliegenden Legierung erzeugten Bauteils, insbesondere eines Presswerkzeuges oder einer Pressmatrize, beiträgt und damit unter Anderem dessen wirtschaftliche Nutzbarkeit im Betrieb deutlich steigert.

Alternativ hierzu kann vorgesehen sein, dass der Anteil von Kohlenstoff im Bereich von 2,0% bis 4,0%, bevorzugt von 2,06% bis 4,0%, besonders bevorzugt von 2,2% bis 4,0% ist. Höhere Kohlenstoffanteile führen beispielsweise zu einer besonders guten Gießbarkeit.

Der oben genannte Gusseisenwerkstoff weist einen Anteil von Nickel im Bereich von 36,5% bis 48,0%, bevorzugt von 37,0% bis 45%, besonders bevorzugt von 37,5% bis 43,0%, noch bevorzugter von 40,1% bis 43,0% auf.

Das hat den Vorteil, dass der Gusseisenwerkstoff auch beim langsamen Erstarren im austenitischen Kristallgitter bleibt und nicht in ein kubisch raumzentriertes Kristallgitter übergeht. Weiterhin ist der Gusseisenwerkstoff paramagnetisch. Das Kristallgitter ist magnetisch im Volumen etwas vorgestreckt. Bei steigender Temperatur nimmt der Magnetismus ab, und die interne Längenänderung zu. Da jedoch das Kristallgitter vorgestreckt ist, heben sich bezüglich einer äußeren Längenänderung beide Effekte auf, so dass nach außen keine Längenänderung erfolgt. Damit hat man unterhalb der Curietemperatur nur äußerst geringe Längenänderungen des Gusseisenwerkstoffs. Der vorliegende Gusseisenwerkstoff wird demnach für definierte Prozesse, die definierte Temperaturbereiche durchlaufen in seiner Kristallstruktur derart angepasst, dass sich die Magnetorestriktion im gewünschten Temperaturbereich optimal bezüglich der Längen- und/oder Volumenausdehnung auswirkt.

Gussstücke aus dem Gusseisenwerkstoff, z.B. ein Oberwerkzeug und Unterwerkzeug einer Presse, verändern die Längenausdehnung im Bereich von 0 bis 420°C nicht relevant. Damit ist zur Herstellung von CFK- oder GFK- Bauteilen ein Aushärten des Harzes bis unter 400°C und anschließende Abkühlung ohne störend wirkenden Verzug des Presslings durch die Dimensionsstabilität des Presswerkzeugs möglich.

In einer weiteren Ausführung weist der oben genannte Gusseisenwerkstoff einen Anteil von Magnesium im Bereich von 0,020% bis 0,150%, bevorzugt von 0,040% bis 0,100%, besonders bevorzugt von 0,065 bis 0,090% auf.

Das hat den Vorteil, das Schwefel gebunden wird und Kristallkeime zur Ausbildung von Kugelgraphit vorhanden sind.

Der oben genannte Gusseisenwerkstoff weist einen Anteil von Silizium im Bereich von 1,0 bis 5,0%, bevorzugt von 1,1 bis 5,0%, besonders bevorzugt von 1,15 bis 5,0%, noch bevorzugter von 1,3 bis 5,0% auf.

Das hat den Vorteil, dass eine günstige Gefügestruktur erreichbar ist. In Nebeneffekten können dabei auch eine gute Festigkeits- und Zähigkeitseigenschaften sowie eine ausreichende Oxidationsbeständigkeit erreicht werden.

Nicht im Rahmen der vorliegenden Erfindung kann der oben genannte Gusseisenwerkstoff einen Anteil von Niob aufweisen, der unter 0,33%, insbesondere unter 0,22%, ganz insbesondere unter 0,11%.

Zwar lehrt der Stand der Technik das Vorsehen von Niob zur Erreichung guter Temperaturbeständigkeit von Bauteilen, die temperaturgeführten Prozessen unterliegen und kann so auch im Zusammenhang mit der Herstellung von Presswerkzeugen, deren Auskleidungen und/oder von Pressmatritzen grundsätzlich positiv wirken, wenn die Presswerkzeuge im Zusammenhang mit temperaturgeführten Pressvorgängen, wie beispielsweise der Erzeugung und/oder Verarbeitung von CFK-Bauteilen, eingesetzt werden sollen. Überraschenderweise wurde jedoch festgestellt, dass Niob die Vergleichgewichtung der weiter oben beschriebenen Phänomene stört und auch in kleinen Mengen geeignet ist, dass Temperaturausdehnungsverhalten der hier vorliegenden Legierungen negativ zu beeinflussen, statt - wie vermutet - erwartete (Längen- bzw. Volumenausdehnungs-)Kurven in einen höheren Temperaturbereich zu verlagern.

In einer Ausführung wird der oben genannte Gusseisenwerkstoff dafür verwendet, dass das aus dem Gusseisenwerkstoff entstehende Gussstück zur Herstellung und/oder Auskleidung eines Formwerkzeugs oder Presswerkzeuges eingesetzt wird.

In einer weiteren Ausführung wird der oben genannte Gusseisenwerkstoff dafür verwendet, das bei einer Presse der Gusseisenwerkstoff als Material für ein Oberpresswerkzeug und Unterpresswerkzeug eingesetzt wird, wobei das Presswerkzeug im kontinuierlichen oder diskreten Betrieb betrieben wird.

Der Gusseisenwerkstoff der obigen Herstellung und/oder Ausführungen wird bevorzugt zur Auskleidung eines Presswerkzeuges verwendet, so dass der Gusseisenwerkstoff im direkten Kontakt mit dem Werkstück steht. Bei der Herstellung ist es von besonderem Vorteil, dass das entsprechende Bauteil, beispielsweise also das Presswerkzeug, die Auskleidung und/oder die Matritze auf diese Art einteilig aus dem Gusseisenwerkstoff hergestellt werden kann.

Der erfindungsgemäße Gusseisenwerkstoff eignet sich besonders bevorzugt zur Herstellung dickwandiger, größerer Gussstücke, die als Formen zur Herstellung von Produkten aus Glasfaserkunststoff (GFK) oder Carbonfaserkunststoff (CFK) dienen. Von größeren Gussstücken spricht die vorliegende Erfindung dann, wenn wenigstens eine Länge des Gusswerkstücks 3000mm, insbesondere wenigstens 5000mm, ganz insbesondere wenigstens 8000mm, oder sogar wenigstens 11500mm überschreitet und/oder das Gusswerkstück wenigstens 0,5t, insbesondere wenigstens 0,75t, ganz insbesondere wenigstens 1,25t oder sogar wenigstens mehr als 2t, mehr als 5t oder mehr als 8t wiegt. Im Rahmen der Erfindung lassen sich folglich Großgussteile mit einer maximalen Wandstärke von mehr als 100mm, vorzugsweise mehr als 200mm, besonders bevorzugt mehr als 300mm herstellen, wobei die Gussstücke hohe Kräfte aufnehmen können.

Überraschender Weise läßt der erfindungsgemäße Gusseisenwerkstoff es sogar zu, dass einteilig aus dem Gusseisenwerkstoff hergestellte Gussstücke ein maximales Wanddickenverhältnis von über 1,41, bei Ni-Anteilen von wenigstens 37,5% sogar über 1,51 und ganz besonders überraschenderweise bei Ni-Anteilen von mehr als 39,25% sogar über 1,65 zulassen, ohne die Vorteile der anpassbaren, sich in den genannten Bereichen bewegenden Volumenänderungsverhalten im Wesentlichen zu verlieren. Dies ist umso erstaunlicher, als man bisher angenommen hat, dass die Herstellung von Gusseisenwerkstoffen oberhalb von 36,0% Ni-Anteile keine weiteren Vorteile mehr böte, sondern im Gegenteil nicht nur unnötig teuer sei, sondern auch erhebliche Nachteile mit sich bringen würde. So ist man im Stand der Technik bislang davon ausgegangen, dass ein Ni-Anteil oberhalb von 36,0 % unter anderem die Ausbildung eines Gusseisenwerkstoffgefüges grundsätzlich verhindern würde.

Die in solchen, insbesondere einstückigen, Presswerkzeugen hergestellten Produkte aus Harz und Glasfasermatten bzw. Carbonfasermatten sind durch Erreichen dieser Eigenschaften der Presswerkzeuge (bzw. deren Auskleidungen und oder deren Matritzen) weitgehend frei von Faserbrüchen, die auf eine Verziehung der Gusstücke oder Formen zurückzuführen sind. Eine Verziehung der Form kann an fehlerhaften Produkten erkannt werden, da in den Produkten Deformierungen des Harzes bis hin zu Rissen auftreten können. Diese Deformierungen können zum Brechen der Glasfasern oder Carbonfasern in mehreren übereinanderliegenden Glasfasermatten oder Carbonfasermatten führen. Die Wandstärken der Produkte und die Verteilung des Harzes kann dabei unterschiedlich sein. Weiterhin können durch die Anordnung der Glasfasermatten oder Carbonfasermatten Strukturen gebildet werden, die in der endgültigen Anordnung abgeschlossene bzw. abgedeckte Hohlräume ausbilden, die eine Stabilisierung der Struktur bewirken, Vibrationen zulassen und diese auch im Zusammenspiel mit weiteren Komponenten dämpfen. Dafür ist es entscheidend, dass die Fasern nicht gebrochen werden und damit Kräfte aufnehmen können. Während des Formvorgangs oder Pressvorgangs wird durch die Dimensionsstabilität der Presswerkzeuge oder des Formwerkzeugs im Verhältnis zum Harz mit eingebetteten GFK oder CFK über einen Temperaturbereich von 0 bis 420°C eine Passung gewährleistet.

Ein Verziehen der Form oder Presswerkzeuge erfolgt nicht. Durch die hohe Wandstärke dauert eine Aushärtung des Harzes etwas länger. Dennoch soll zur Erreichung einer Effektivität die Zeit zur Aushärtung nicht übermäßig lang sein, was durch eine Temperatursteigerung günstig beeinflussbar ist. Das bedeutet aber auch, dass die Längenausdehnung des Presswerkzeugs oder Formwerkzeugs der Längenausdehnung des Glasfaserkunststoffs oder Carbonfaserkunststoffs exakt entspricht bzw. sehr ähnlich ist.

Zudem ist weiterhin vorteilhaft, dass auch Verschiebungen im Belegungsprozess des offenen Presswerkzeuges mit hauchdünnen thermoplastischen Prepregs aus CFK Material verhindert sind. Da zur Erzeugung großer Bauteile aus CFK-Material eine Vielzahl solcher hauchdünner (bspw. 0,04mm bis 0,72mm) Prepregs übereinandergelegt werden müssen, reichen hier bereits geringste Verlagerungen vor oder im Schließprozess der Presse um im geschlossenen Zustand der Presse starke Inhomogenitäten hinsichtlich der Druckverteilung zu erzeugen und damit eine ordnungsgemäße Herstellung des zu erzeugenden Produkts zu verhindern.

Zur Herstellung des erfindungsgemäßen Gusseisenwerkstoffs werden die Materialien z.B. Schrott, Roheisen, Nickel, u.s.w in einem geeigneten Ofen erschmolzen. Zur Anregung einer Keimerzeugung wird der Schmelze ein Eisen-Silizium Impfmittel zugegeben. Dieses wird ggf. auch im Gießbecken zugesetzt. Die Gießtemperatur sollte dann der Wanddicke des zu erzeugenden Werkstücks angepasst werden und sollte innerhalb eines Bereichs von ca. 1330°C bis ca. 1480°C liegen und umso höher sein, je dünnwandiger das zu erzeugende Werkstück auszubilden ist.

Anschließend wird die Schmelze in eine vorbereitete Gießform gegossen, wobei der Hohlraum der Gießform das entstehende Formwerkzeug oder die Presswerkzeuge z.B. Oberwerkzeug, Unterwerkzeug, Walzen, Auskleidung für Presse darstellt. Nach der Abkühlung wird das Gussstück entnommen und für den Einsatz weiterbearbeitet bzw. vorbereitet.

Normalerweise muss dann meist zur Verringerung der internen Spannungen das Gussstück nochmals auf ca. 550°C bis etwa 650°C erwärmt und langsam abgekühlt. Anschließend kann das Gussstück fertig bearbeitet und als Auskleidung in ein Formwerkzeug oder als ein Presswerkzeug eingebaut werden, dass seinerseits für einen Umformverfahren von thermoplastischen Halbzeugen, wie Organoblechen o.Ä., verwendet werden kann. Überraschender Weise ist eine solche, oben genannte, Wärmebehandlung bei der erfindungsgemäßen Gusseisenwerkstofflegierung, insbesondere bei der Anwendung zur Herstellung von Grossgussteilen, zur Erzeugung von präzisen Bauteilgeometrien nicht, wie im Stand der Technik üblich, erforderlich.

Zur Ermittlung der Zusammensetzung des Gusseisenwerkstoffs kann optische Emissionsspektrometrie und Röntgenfluoreszenz eingesetzt werden. Für die Ermittlung der Ausbildung von Kugelgraphit wird ein metallographischer Schliff hergestellt, d.h. eine Materialprobe wird entnommen, geschnitten und unter einem Mikroskop z.B. mit einem Lichtmikroskop oder einem Rastelektronenmikroskop ein Bild erzeugt. Kugelgraphit erscheint in dem Bild in einer eher kreisförmigen Form, Lamellengraphit erscheint in dem Bild in einer eher gestreckten Form.

Das Rasterelektronenmikroskop kann einen Aufsatz zur Messung der Röntgenfluoreszenz aufweisen, so dass zumindest integral über den Schliff die elementare Zusammensetzung der Materialprobe im Eindringbereich der Röntgenstrahlung ermittelbar ist. Damit sind Gewichtsprozente bestimmbar und können mit den beanspruchten Gewichtsprozenten abgeglichen werden.

Das Vorliegen der vorteilhaften Ausbildung eines Kugelgraphitgefüges kann auch über eine Schallgeschwindigkeitsmessung bspw. gegenüber dem Vorliegen eines mit den oben beschriebenen Nachteilen behafteten Stahlgussgefüges zerstörungsfrei abgegrenzt bzw. nachgewiesen werden.

Mit großem Vorteil wird das aus dem Gusseisenwerkstoff entstehende Gussstück zur Herstellung und/oder Auskleidung eines Formwerkzeugs oder Presswerkzeuges eingesetzt.

Weiter wird mit großem Vorteil der Gusseisenwerkstoff, als Material für ein Oberpresswerkzeug und Unterpresswerkzeug eingesetzt, wobei das Presswerkzeug im kontinuierlichen oder im diskreten Betrieb betrieben wird.

Ein Presswerkzeug, insbesondere für Pressen mit großen Arbeitsflächen, bei denen mindestens eine die Arbeitsfläche beschreibende Länge wenigstens 2 m, 3m, 5m oder gar über 8 m misst, läßt sich durch Verwendung des vorliegenden Gusseisenwerkstoffs besonders wirtschaftlich herstellen und ist durch sein gutes Dämpfungsverhalten und seine extrem geringes thermisches Ausdehnungsverhalten in hervorragender Art und Weise dazu geeignet.

Es ist weiter von besonderem Vorteil, wenn der Gusseisenwerkstoff zur Herstellung und/oder Auskleidung eines Presswerkzeuges oder einer Pressmatritze verwendet wird, wobei die exakte chemische Zusammensetzung an das jeweilige Ausdehnungsverhalten eines zu verpressenden Werkstoffs, insbesondere eines zu verpressenden Verbundwerkstoffs, und einer dazu vorgesehenen Prozesstemperatur, angepasst wird. Schließlich ist bei einem Verfahren zur Herstellung und/oder Auskleidung eines Formwerkzeugs oder Presswerkzeuges in einem Gießvorgang bei dem wenigstens ein Teil des in der Schmelze vorhandenen Kohlenstoffs zur Bildung eines Gusseisenwerkstoffs ausgeschieden wird von großem Vorteil, wenn eine Materialzusammensetzung zur Erzielung eines Gusseisenwerkstoffs gemäß einem der Ansprüche 1 bis 8 verwendet wird, da der vorliegende Gusseisenwerkstoff ein besonders gutes Dämpfungsverhalten und ein extrem geringes thermisches Ausdehnungsverhalten zeigt.

Im Zusammenhang mit den zuvor beschriebenen Erfindungsgegenständen wird auf die taggleich eingereichte Patentanmeldung "Presssystem und Presswerkzeug für ein Presssystem, sowie Verfahren zur Herstellung eines Werkstücks" hingewiesen, deren Offenbarungsgehalt hiermit vollumfänglich zum Bestandteil auch der vorliegenden Patentanmeldung gemacht wird.

Im Weiteren wird die Erfindung zudem anhand vorteilhafter Ausführungsbeispiele beschrieben:
In einer ersten Ausführung werden zur Herstellung des Gusseisenwerkstoffes einem Elektroinduktionsofen mit einem Fassungsvermögen von 8t Schmelze 1t Roheisen, 4t Schrott, 3t Nickel und 200kg eines Kohlenstoffträgers zugegeben und bei 1500°C geschmolzen. Nach dem Aufschmelzen werden die sich an der Oberfläche der Schmelze bildenden Verunreinigungen entfernt und eine Probe zur Materialanalyse und ggf.

Korrektur der Schmelzezusammensetzung entnommen. Bei der Abgabe der Schmelze aus dem Ofen wird diese unter Zugabe einer magnesiumhaltigen Vorlegierung zur Sicherstellung einer kugeligen Graphitausbildung behandelt. Anschließend wird die Schmelze in die vorbereitete Gussform gefüllt. Die Gussform hat einen Hohlraum, der der Form der Auskleidung eines Formwerkzeuges oder eines Presswerkzeuges entspricht. Nach der langsamen Abkühlung in der Form zur Reduzierung der Eigenspannungen wird das Gussstück aus der Form ausgeleert und geputzt. Nach einer mechanischen Bearbeitung wird das Gussstück als Auskleidung in ein Formwerkzeug oder ein Presswerkzeug eingebaut.

Die Analyse einer Materialprobe von dem Gussstück führt zu folgenden Anteilen (in Gewichtsprozent) einer Materialzusammensetzung:

| | |
|---|---|
| Kohlenstoff | 1,50% |
| Silizium | 1,50% |
| Mangan | 0,20% |
| Phosphor | 0,025% |
| Kupfer | 0,10% |
| Nickel | 38,00% |
| Chrom | 0,10% |
| Magnesium | 0,065% |

Rest Eisen und Verunreinigungen.

In einer zweiten Ausführung werden einem Elektroinduktionsofen für 8t Schmelze 1,5t Roheisen, 3,3t Schrott, 3,2t Nickel und 150kg eines Kohlenstoffträgers zugegeben.

Die Analyse einer Materialprobe von dem Gussstück führt zu folgenden Anteilen (in Gewichtsprozent) einer Materialzusammensetzung:

| | |
|---|---|
| Kohlenstoff | 1,70% |
| Silizium | 1,70% |
| Mangan | 0,25% |
| Phosphor | 0,025% |
| Kupfer | 0,10% |
| Nickel | 40,00% |
| Chrom | 0,10% |
| Magnesium | 0,070% |

Rest Eisen und Verunreinigungen.

In einer dritten Ausführung werden einem Elektroinduktionsofen für 8t Schmelze 2t Roheisen, 2,6t Schrott, 3,4t Nickel und 100kg eines Kohlenstoffträgers zugegeben.

Die Analyse einer Materialprobe von dem Gussstück führt zu folgenden Anteilen (in Gewichtsprozent) einer Materialzusammensetzung:

| | |
|---|---|
| Kohlenstoff | 1,80% |
| Silizium | 1,70% |
| Mangan | 0,25% |
| Phosphor | 0,025% |
| Kupfer | 0,10% |
| Nickel | 42,00% |
| Chrom | 0,10% |
| Magnesium | 0,080% |

Rest Eisen und Verunreinigungen.

In einer vierten Ausführung werden einem Elektroinduktionsofen für 8t Schmelze 3,2t Roheisen, 1,8t Schrott, 3t Nickel und 280kg eines Kohlenstoffträgers zugegeben.

Die Analyse einer Materialprobe von dem Gussstück führt zu folgenden Anteilen (in Gewichtsprozent) einer Materialzusammensetzung:

| | |
|---|---|
| Kohlenstoff | 2,55% |
| Silizium | 1,8% |
| Mangan | 0,30% |
| Phosphor | 0,02% |
| Kupfer | 0,08% |
| Nickel | 37,75% |
| Chrom | 0,20% |
| Magnesium | 0,08% |

Rest Eisen und Verunreinigungen.

In einer fünften Ausführung werden einem Elektroinduktionsofen für 8t Schmelze 3t Roheisen, 1,9t Schrott, 3,1t Nickel und 220kg eines Kohlenstoffträgers zugegeben.

Die Analyse einer Materialprobe von dem Gussstück führt zu folgenden Anteilen (in Gewichtsprozent) einer Materialzusammensetzung:

| | |
|---|---|
| Kohlenstoff | 2,06% |
| Silizium | 1,65% |
| Mangan | 0,25% |
| Phosphor | 0,02% |
| Kupfer | 0,10% |
| Nickel | 38,75% |
| Chrom | 0,15% |
| Magnesium | 0,10% |

Rest Eisen und Verunreinigungen.

In einer sechsten Ausführung werden einem Elektroinduktionsofen für 8t Schmelze 3,2t Roheisen, 1,75t Schrott, 3,05t Nickel und 350kg eines Kohlenstoffträgers zugegeben.

Die Analyse einer Materialprobe von dem Gussstück führt zu folgenden Anteilen (in Gewichtsprozent) einer Materialzusammensetzung:

| | |
|---|---|
| Kohlenstoff | 3,00% |
| Silizium | 1,95% |
| Mangan | 0,25% |
| Phosphor | 0,02% |
| Kupfer | 0,10% |
| Nickel | 38,05% |
| Chrom | 0,15% |
| Magnesium | 0,10% |

Rest Eisen und Verunreinigungen.

Auch die zweite bis sechste Ausführung, beispielsweise die vierte bis sechste Ausführung werden bevorzugt unter den zur ersten Ausführung beschriebenen Umständen erzeugt. Es ist selbstverständlich, dass unter dem Fassungsvermögen von 8t die Nutzlast des in den Ausführungen angenommenen Elektroinduktionsofens, nicht das maximale herstellbare Gewicht, zu verstehen ist.

Die Erfindung ist nicht auf die dargestellten und beschriebenen Ausführungsbeispiele beschränkt, sondern kann innerhalb des durch die unabhängigen Ansprüche definierten Schutzbereiches in sinnvoller Weise angepasst und/oder ergänzt werden, ohne den Bereich der Erfindung zu verlassen. Insbesondere sind, je nach Anwendungsfall, eine Vielzahl von Zwischenbereichen der genannten Legierungsanteile für verschiedene weitere Ausführungsformen denkbar und sinnvoll. Insbesondere kann der Nickelgehalt für spezielle Ausführungsformen enge Zwischenbereiche annehmen, ohne die Lehre der Erfindung zu verlassen. Selbstverständlich sind die genannten Ausführungsbeispiele auch auf andere Gesamtmengen skalierbar.

## Patentansprüche

1. Gusseisenwerkstoff, der zumindest folgende Anteile in Gewichtsprozent als Elemente oder als Verbindungen von:
Kohlenstoff im Bereich von 1,0% bis 4,0%,
Silizium im Bereich von 1,0% bis 5,0%,
Mangan im Bereich von 0,1% bis 1,5%,
Nickel im Bereich von 36,5% bis 48,0%,
Chrom im Bereich von 0,01% bis 0,25%,
Phosphor bis 0,08%,
Kupfer bis 0,5%,
Magnesium bis 0,15%,
umfasst, Rest Eisen und unvermeidbare Verunreinigungen.

2. Gusseisenwerkstoff nach Anspruch 1,
**dadurch gekennzeichnet, dass**
zusätzlich zu den aufgeführten Elementen Verunreinigungen im Gusseisenwerkstoff im Bereich von 0,0% bis 5,0%, vorzugsweise 0,0% bis 1,0%, ganz bevorzugt 0,0% bis 0,5% enthalten sind.

3. Gusseisenwerkstoff nach einem der Ansprüche 1 oder 2,
**dadurch gekennzeichnet, dass**
der Anteil von Kohlenstoff im Bereich von 1,0% bis 3,2%, bevorzugt von 1,0% bis 2,5%, besonders bevorzugt von 1,3% bis 2,0% ist.

4. Gusseisenwerkstoff nach einem der Ansprüche 1 oder 2,
**dadurch gekennzeichnet, dass**
der Anteil von Kohlenstoff im Bereich von 2,0% bis 4,0%, bevorzugt von 2,06% bis 4,0%, besonders bevorzugt von 2,2% bis 4,0% ist.

5. Gusseisenwerkstoff nach einem der vorhergehenden Ansprüche,
**dadurch gekennzeichnet, dass**
der Anteil von Nickel im Bereich von 37,0% bis 48,0%, bevorzugt von 37,0% bis 45,0%, besonders bevorzugt von 37,5 bis 43,0% ist, noch bevorzugter von 40,1% bis 43,0%.

6. Gusseisenwerkstoff nach einem der vorhergehenden Ansprüche,
**dadurch gekennzeichnet, dass**
dieser einen Anteil von Magnesium im Bereich von 0,020% bis 0,150%, bevorzugt von 0,040% bis 0,100%, besonders bevorzugt von 0,065% bis 0,090% aufweist.

7. Gusseisenwerkstoff nach einem der vorhergehenden Ansprüche,
**dadurch gekennzeichnet, dass**
der Anteil von Silizium im Bereich von 1,1% bis 5,0%, bevorzugt von 1,15% bis 5,0%, besonders bevorzugt von 1,3% bis 5,0% ist.

8. Gusseisenwerkstoff nach einem der vorhergehenden Ansprüche,
**dadurch gekennzeichnet, dass**
der Kohlenstoff wenigstens vorwiegend als Kugelgraphit vorliegt.

9. Verwendung eines Gusseisenwerkstoffs nach einem der Ansprüche 1 bis 8,
wobei das aus dem Gusseisenwerkstoff entstehende Gussstück zur Herstellung und/oder Auskleidung eines Formwerkzeugs oder Presswerkzeuges eingesetzt wird.

10. Verfahren zur Herstellung und/oder Auskleidung eines Formwerkzeugs oder Presswerkzeuges in einem Gießvorgang bei dem wenigstens ein Teil des in der Schmelze vorhandenen Kohlenstoffs zur Bildung eines Gusseisenwerkstoffs ausgeschieden wird,
**dadurch gekennzeichnet, dass**
eine Materialzusammensetzung zur Erzielung eines Gusseisenwerkstoffs gemäß einem der Ansprüche 1 bis 8 verwendet wird.

## Claims

1. Cast iron material, which comprises at least the proportions in percentage by weight as elements or compounds of:
Carbon in the range of 1.0% to 4.0%,
Silicon in the range of 1.0% to 5.0%,
Manganese in the range of 0.1% to 1.5%,
Nickel in the range of 36.5% to 48.0%,
Chromium in the range of 0.01% to 0.25%,
Phosphorus up to 0.08%,
Copper up to 0.5%,
Magnesium up to 0.15%,
with the remainder being iron and unavoidable impurities.

2. Cast iron material according to claim 1, **characterised in that,** in addition to the listed elements, impurities are contained in the cast iron material in the range of 0.0% to 5.0%, preferably 0.0% to 1.0%, quite preferably 0.0% to 0.5%.

3. Cast iron material according to any one of claims 1 or 2, **characterised in that** the proportion of carbon is in the range of 1.0% to 3.2%, preferably of 1.0% to 2.5%, particularly preferred of 1.3% to 2.0%.

4. Cast iron material according to any one of claims 1 or 2, **characterised in that** the proportion of carbon is in the range of 2.0% to 4.0%, preferably of 2.06% to 4.0%, particularly preferably of 2.2% to 4.0%.

5. Cast iron material according to any one of the preceding claims, **characterised in that** the proportion of nickel is in the range of 37.0% to 48.0%, preferably of 37.0% to 45.0%, particularly preferably of 37.5 to 43.0%, even more preferably of 40.1% to 43.0%.

6. Cast iron material according to any one of the preceding claims, **characterised in that** it has a proportion of magnesium in the range of 0.020% to 0.150%, preferably of 0.040% to 0.100%, particularly preferably of 0.065% to 0.090%.

7. Cast iron material according to any one of the preceding claims, **characterised in that** the proportion of silicon is in the range of 1.1% to 5.0%, preferably of 1.15% to 5.0%, particularly preferably of 1.3% to 5.0%.

8. Cast iron material according to any one of the preceding claims, **characterised in that** the carbon is present at least predominantly as spheroidal graphite.

9. Use of a cast iron material according to any one of claims 1 to 8, wherein the casting resulting from the cast iron material is used to manufacture and/or line a forming tool or pressing tool.

10. Method for manufacturing and/or lining a forming tool or pressing tool in a casting process in which at least a part of the carbon present in the melt is precipitated to form a cast iron material, **characterised in that** a material composition is used to achieve a cast iron material according to any one of claims 1 to 8.

## Revendications

1. Matière à base de fonte, contenant au moins les proportions suivantes en pourcentage massique sous forme d'éléments ou de composés :
Carbone dans une plage de concentration allant de 1,0 % à 4,0 %,
Silicium dans une plage de concentration allant de 1,0 % à 5,0 %,
Manganèse dans une plage de concentration allant de 0,1 % à 1,5 %,
Nickel dans une plage de concentration allant de 36,5 % à 48,0 %,
Chrome dans une plage de concentration allant de 0,01 % à 0,25 %,
Phosphore jusqu'à 0,08 %,
Cuivre jusqu'à 0,5 %,
Magnésium jusqu'à 0,15 %,
Le reste étant constitué de fer et d'impuretés inévitables.

2. Matière à base de fonte selon la revendication 1,
**caractérisée en ce que**
outre les éléments énumérés, des impuretés sont présentes dans la matière à base de fonte dans une plage de concentration allant de 0,0 % à 5,0 %, de préférence de 0,0 % à 1,0 %, et tout particulièrement de 0,0 % à 0,5 %.

3. Matière à base de fonte selon l'une des revendications 1 ou 2,
**caractérisée en ce que**
la teneur en carbone se situe dans une plage de concentration allant de 1,0 % à 3,2 %, de préférence de 1,0 % à 2,5 %, et tout particulièrement de 1,3 % à 2,0 %.

4. Matière à base de fonte selon l'une des revendications 1 ou 2,
**caractérisée en ce que**
la teneur en carbone se situe dans une plage de concentration allant de 2,0 % à 4,0 %, de préférence de 2,06 % à 4,0 %, et tout particulièrement de 2,2 % à 4,0 %.

5. Matière à base de fonte selon l'une des revendications précédentes,
**caractérisée en ce que**
la teneur en nickel se situe dans une plage de concentration allant de 37,0 % à 48,0 %, de préférence de 37,0 % à 45,0 %, tout particulièrement entre 37,5 et 43,0 %, et de manière encore plus préférentielle entre 40,1 % et 43,0 %.

6. Matière à base de fonte selon l'une des revendications précédentes,
**caractérisée en ce que**
celle-ci présente une teneur en magnésium dans une plage de concentration allant de 0,020 % à 0,150 %, de préférence de 0,040 % à 0,100 %, et tout particulièrement entre 0,065 % et 0,090 %.

7. Matière à base de fonte selon l'une des revendications précédentes,
**caractérisée en ce que**
la teneur en silicium se situe dans une plage de concentration allant de 1,1 % à 5,0 %, de préférence de 1,15 % à 5,0 %, et tout particulièrement de 1,3 % à 5,0 %.

8. Matière à base de fonte selon l'une des revendications précédentes,
**caractérisée en ce que**
le carbone se présente au moins principalement sous forme de graphite sphéroïdal.

9. Utilisation d'une matière à base de fonte selon l'une des revendications 1 à 8, le produit coulé issu de la matière à base de fonte étant utilisé pour la fabrication et/ou le revêtement d'un outil de moulage ou d'un outil de compression.

10. Procédé de fabrication et/ou de revêtement d'un outil de moulage ou d'un outil de compression lors d'un processus de moulage dans lequel au moins une partie du carbone présent dans la masse en fusion est exsudée pour constituer une matière à base de fonte,
**caractérisée en ce que**
une composition de matériau est utilisée afin d'obtenir une matière à base de fonte selon l'une des revendications 1 à 8.
